Europäisches Patentamt

(19) European Patent Office

Office européen des brevets

(11) Publication number: **0 083 836**
**A2**

# (12) EUROPEAN PATENT APPLICATION

(21) Application number: **82305977.9**

(22) Date of filing: **10.11.82**

(51) Int. Cl.³: **G 05 B 19/405**

(30) Priority: **12.11.81 JP 181367/81**

(43) Date of publication of application:
**20.07.83 Bulletin 83/29**

(84) Designated Contracting States:
**CH DE FR GB LI**

(71) Applicant: **Fanuc Ltd**
**5-1, Asahigaoka, 3-chome**
**Hino-shi, Tokyo 191(JP)**

(72) Inventor: **Kinoshita, Mitsuo**
**Nanyodai 69-18 1755-328, Horinouchi**
**Hachioji-shi Tokyo(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **Method and apparatus for displaying movement in numerically controlled machines.**

(57) There are disclosed a method of and an apparatus for displaying a path of movement of a machine tool numerically controllable by a numerical control system (2,3) which processes machining command data supplied from an external source to produce a movement command for numerically controlling the movement of the machine tool. The method comprises the steps of converting the movement command from the numerical control system (2, 3) into coordinate data on a display unit (8) during a machining mode of operation of the machine tool, and displaying a machining path of movement of the machine tool on said display unit (8) based on said coordinate data. The arrangement allows the operator to monitor on the display unit (8) how much a workpiece has been machined on the machine tool.

Fig. I

METHOD OF AND APPARATUS FOR DISPLAYING

MOVEMENT PATHS IN NUMERICALLY  CONTROLLED MACHINES


The present invention relates to a method of and an apparatus for displaying a        movement path in a machine
                    example but not exclusively
tool, for/   an electric discharge cutting machine numerically controlled by a numerical control system, and more
              but not exclusively
particularly /to a method of and an apparatus for displaying a table movement path in response to a movement command supplied from the numerical control system to the machine tool.

Numerical control systems are widely used which control the movement of a workpiece-supporting table of a machine tool such as an electric discharge cutting machine for enabling the machine tool to cut, bore or otherwise machine a workpiece on the table.  The numerical control system operates by reading out machining command data stored in a storage medium such as a paper tape, interpreting and processing the machining
                                          and
command data for numerical control,/delivering the data to the machine tool via a power sequence circuit when it is composed of M, S, T function commands, or to a pulse distributor when the data is composed of a movement command.  In the pulse
                                ˎ
distributor, the data is subjected to arithmetic operations for pulse distribution and supplied to a linear and circular pulse interpolator, which produces interpolated pulses for controlling the machine tool.  The machine tool has motors for driving the workpiece-supporting table along various axes based on the supplied interpolated pulses.

As the accuracy with which the table can be positioned to a nicety becomes higher and higher, the numerical control system is capable of controlling the machine tool to machine a workpiece to more complex contours, but in a longer continuous period of time. In particular, some electric discharging cutting machines are designed to take one day or a few consecutive days before a workpiece is completely machined.

There has accordingly been a need for the operator to be able to observe the manner in which the workpiece is being machined at intervals during the extended machining period of time, and also to find out how much the workpiece has been machined in preparation for the next processing step.

The numerical control system may have a digital display unit for digitally displaying the content of a current command being given to the machine tool, a form of information which only highly skilled operators can interpret correctly. The digital display unit, however, fails to enable ordinarily skilled operators to have a proper idea as to the current position and machining path of the machine tool.

According to one aspect of the present invention there is provided a method of displaying a path of movement of a machine tool numerically controllable by a numerical control system which processes machining command data supplied from an external source to produce a movement command for numerically controlling the movement of the machine tool, comprising the steps of:

converting the movement command from the numerical control system into coordinate data on a display unit during a machining mode of operation of the machine tool; and

displaying a machining path of movement of the machine tool on said display unit based on said coordinate data.

According to another aspect of the present invention there is provided an apparatus for displaying a path of movement of a machine tool numerically controllable by a numerical control system which processes machining command data supplied from an external source to produce a movement command for numerically controlling a movement of the machine tool, comprising:

a display control connected to the numerical control system for converting the movement command from the numerical control system into coordinate data; and

a display system for displaying a machining path of movement of the machine tool based on said coordinate data.

Examples of the present invention may provide a method of and an apparatus for graphically displaying a path of movement of the workpiece-supporting table of a machine tool which is numerically controlled by a numerical control system.

Examples of the present invention may provide a method of and an apparatus for displaying a path of movement of a machine tool controlled by a numerical control system, so that the operator can observe the manner in which the workpiece is being machined.

Examples of the present invention may

0083836

provide a method of and an apparatus for displaying a path of movement of a machine tool controlled by a numerical control system by processing a movement command supplied from the numerical. control system without detecting the actual movement of the machine tool.                                          .

        Examples    of the present invention may provide a method of and an apparatus for displaying an actual path of movement of a machine tool controlled by a numerical control system in superimposed relation to a planned path of movement of the machine tool.

        Examples    of the present invention may provide a method of and an apparatus for displaying a path of movement of a machine tool controlled by a numerical control system to enable the operator to find out how much a workpiece has been machined on the machine tool.
                          preferred examples of
        According to/the present invention, a movement command issued from a numerical control system for controlling a machine tool is converted into coordinate data on a display unit, and the coordinate data is processed to display a machining path of movement of the machine tool on the display unit.
                                            examples of
        The above and other        features and advantages of / .

the present invention will become more apparent from the
                                    ˊ
following description when taken in conjunction with the accompanying drawings in which preferred embodiments of the present invention are shown by way of illustrative example.


        Fig. 1 is a block diagram illustrative of a method of and an apparatus for displaying a table movement path according to the present invention;

Fig. 2 is a diagram showing a table movement path displayed according to the present invention;

Fig. 3 is a diagram showing another table movement path displayed in accordance with the present invention;

Fig. 4 is a diagram illustrating still another table movement path displayed according to the present invention;

Fig. 5 is a detailed block diagram of a portion of the arrangement of Fig. 1 which is designed to display the table movement path illustrated in Fig. 2; and

Fig. 6 is a detailed block diagram of a portion of the arrangement of Fig. 1 which is constructed for displaying the table movement path of Fig. 3.

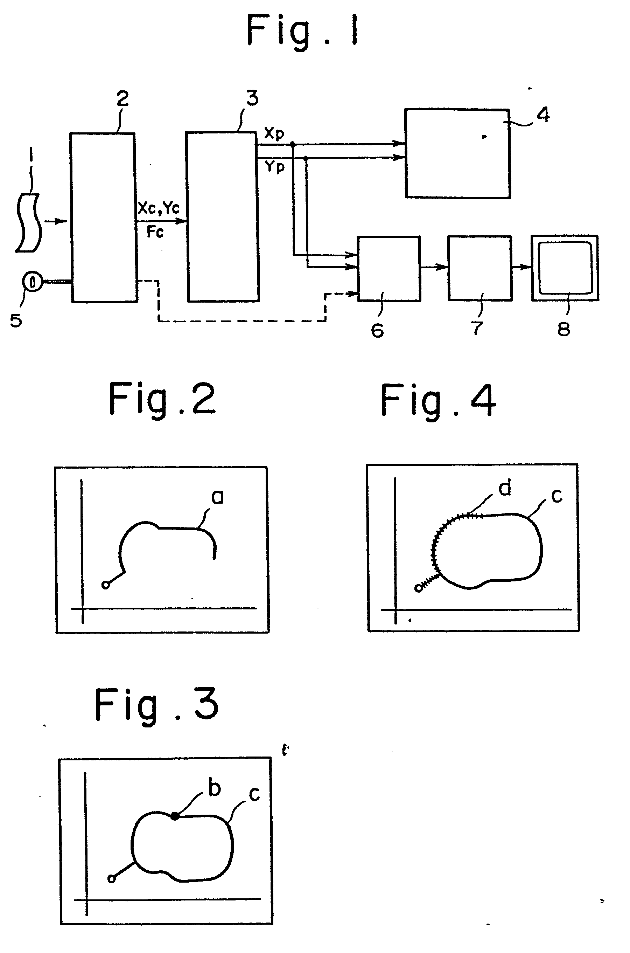

In Fig. 1, a control unit 2 in a numerical control system comprises a known microcomputer and is operable in response to machining command data read by a tape reader (not shown) out of a paper tape 1 storing such machining command data. The paper tape 1 may be replaced with other data storage medi a such/for example a magnetic bubble memory. The machining command data as supplied to the control unit 2 is interpreted thereby, and is delivered to a machine tool 4 via a power sequence circuit (not shown) when the data is composed of M, S, T function commands. When the data is interpreted as being a movement command, the control unit 2 delivers signals indicative of commanded intervals of movement $X_c$, $Y_c$ and a signal indicative of a commanded speed $F_c$ to a pulse interpolator 3 of a known construction, which then issues interpolated pulses $X_p$, $Y_p$ to control movements along axes in the machine tool, here two axes X and Y. The control unit 2 and the pulse interpolator 3 jointly constitute the

The machine tool 4 is typically in the form of a 0083836 wire-cut electric discharge machine having a table for supporting a workpiece thereon and a motor for driving the table. The numerical control system has a switch 5 for commanding a dry run for the system. A display control 6 serves to convert the interpolated pulses $X_p$, $Y_p$ for the X- and Y-axes from the pulse interpolator 3 into coordinate data, which is sent to an image memory 7 having a storage capacity corresponding to a single picture image. Data on a picture image is then supplied from the image memory 7 to a display unit 8 comprising a raster-scanning CRT, for example.

Operation of the arrangement of Fig. 1 with a raster-scanning graphics CRT employed as the display unit 8 will now be described.

When command data as read out of the paper tape 1 and interpreted by the control unit 2 is composed of a movement command, the control unit 2 generates signals indicative of a commanded speed $F_c$ and commanded intervals of movement $X_c$, $Y_c$. The pulse interpolator 3 is responsive to these signals for producing interpolated pulses $X_p$, $Y_p$ for the X- and Y-axes and supplying them to the machine tool 4. The machine tool 4 then moves the table on which a workpiece is mounted in two-dimensional directions (X and Y directions) in response to the supplied interpolated pulses $X_p$, $Y_p$ to thereby cut the workpiece to desired contour with an electric discharge. At the same time, the display control 6 prepares two-dimensional coordinates from the interpolated pulses $X_p$, $Y_p$. To enable the creation of such two-dimensional coordinates, the display control 6 has an X-axis and Y-axis coordinate counters for counting interpolated pulses Xp, Yp along the X- and Y-axes and producing memory addresses corresponding to counts each time the interpolated pulses Xp, Yp are received. Each of the produced memory addresses allows a signal of a logic level "1" to be written in a corresponding address in the image memory 7. The image memory 7 can thus store data on a path of movement of the table of the machine tool 4.

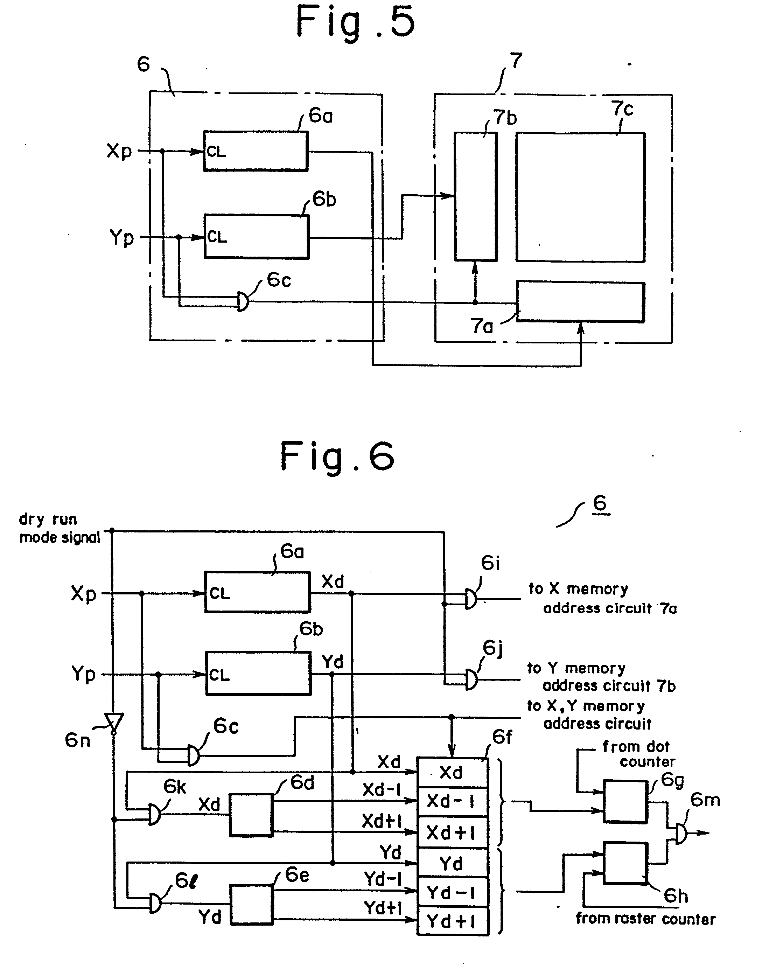

Fig. 5 shows the display control 6 and the image memory 7 in more detail. The X-axis and Y-axis coordinate counters in the display control 6 are designated at 6a, 6b, respectively. The display control 6 also has an OR gate 6c for ORing the interpolated pulses Xp, Yp. The image memory 7 has an X-axis memory addressing circuit 7a receptive of the count from the X-axis coordinate counter 6a for writing a signal indicative of the count in response to a writing pulse supplied from the OR gate, a Y-axis memory addressing circuit 7b receptive of the count from the Y-axis coordinate counter 6b for writing a signal indicative of the count in response to a writing pulse delivered from the OR gate 6c, and a storage area 7c which is addressable by the X- and Y-axis memory addressing circuits 7a, 7b. Each time the interpolated pulses Xp, Yp are generated, the X- and Y-axis coordinate counters 6a, 6b count up the pulses, and renewed counts thereof are delivered to the X- and Y-axis memory addressing circuits 7a, 7b, respectively, which then write a signal of a logic level "1" representative of a unit dot for a movement path at a corresponding addressed position in the storage area 7c. Data thus stored in the image memory 7 is read out successively by raster scanning at the frame scanning speed of the display unit 8, which now displays a path of table movement a or a machining path for the machine tool 4 as shown in Fig. 2 as the table of the machine tool 4 moves.

Due to the positional and speed control required on the machine tool 4, the actual movement of the table of the machine tool is slightly delayed after the interpolated pulses Xp, Yp have been generated by the numerical control system, and hence the actual table motion and the machining path display slightly differ in time. However, such a difference is negligible as compared with the length of time it takes for the machine tool to cut or otherwise machine the workpiece.

While in the foregoing embodiment two-dimensional coordinate positions are displayed for biaxial control of the machine tool table in an X-Y plane, three-dimensional coordinate positions can also be displayed by a modified display system for triaxial control along X-, Y-, and Z-axes. The modified display system can be constructed by adding a Z-axis coordinate counter to the display control 6 and known three-dimensional graphics display means for converting three-dimensional coordinates along X-, Y-, and Z-axes into two-dimensional coordinates. The modified display system thus enables three-dimensional images to be displayed on the display unit 8 for triaxial machine tool control.

Another embodiment according to the present invention will be described.

The numerical control system is operable in a dry-run mode in which actual machining operation of the machine tool 4 is preceded by trial movement of the machine tool table under machining command data without actual machining so as to ascertain whether the machining command data and the table movement are correct or not. The numerical control system can enter such a dry-run mode by actuating the dry-run commanding switch 5.

As shown in Figs. 3 and 4, in the dry-run mode of operation, a current table position can be displayed by a marking b (Fig. 3) or a thicker line d (Fig. 4) on a planned path of movement c.

When the dry-run switch 5 is actuated to put the control unit 2 into the dry-run mode, the control unit 2 disregards data on a command speed of table movement as read out of the paper tape 1, but produces data on a command interval of table movement as read from the paper tape 1 and data on a speed of table as set by a jogging-feed-speed switch on a manual control panel. Before effecting the dry run, any tool and wire should be dismounted from the machine tool 4 at first. In response to the output from the control unit 2, the pulse interpolator 3 generates interpolated pulses Xp, Yp to move the table of the machine tool 4. As there are no tool and wire on the machine tool 4 and hence no machining is performed on the workpiece on the table, the table can be moved at a much higher speed than that of movement·of the table in actual machining operation. The planned path of movement can be displayed by the interpolated pulses Xp, Yp produced during the dry run. More specifically, the interpolated pulses Xp, Yp are converted by the display control 6 into coordinate data, which is written in the image memory 6 and displayed as the path of movement c on the display unit 8 as shown in Figs. 3 and 4. Since the table moves rapidly in the dry run and the table movement along the commanded path is completed in a moment, the path of movement can be written in the image memory 7 in a short period of time.

0083836

For an actual machining operation, the dry run switch 5 is turned off, the tool and wire are attached in position, and the machine tool 4 is started. The control unit 2 now issues data on a speed of movement of the table and coordinate data based on the command data stored in the paper tape.1. The pulse interpolator 3 is responsive to the output from the control unit 2 for generating interpolated pulses Xp, Yp to move the table of the machine tool 4 at the command speed along the command path of movement. The display control 6 is supplied with the interpolated pulses Xp, Yp to create signals indicative of memory addresses, and also with a command signal representing a non-dry run mode of operation from the control unit 2 along a route as shown by the dotted line in Fig. 1. To display the path as illustrated in Fig. 3, the display control 6 additionally includes a circuit for generating signals of as many addresses around the marking b as necessary to indicate the marking b, and a register for storing such address signals. When the addresses stored in the register agree on comparison with counts from a raster counter and a dot counter (not shown) for reading out data from the image memory 7 in synchronism with raster scanning, the display control 6 issues a bit output, which is mixed with an output from the image memory 7. The mixed signals are then delivered as video signals to the display unit 8, on which the image as shown in Fig. 3 is displayed.

As shown in Fig. 6, the display control 6 has, in addition to the X-axis counter 6a, the Y-axis counter 6b and the OR gate 6c, an X-axis counter 6d for generating X-axis addresses on both sides of addresses produced by the X-axis counter 6a, and a Y-axis counter 6e for generating Y-axis addresses on both sides of addresses produced by the Y-axis. The counters 6d, 6e are supplied with X- and Y-axis addresses Xd, Yd from the X- and Y-axis counters 6a, 6b and add + 1, - 1 to the addresses Xd, Yd to generate (Xd - 1), (Xd + 1), (Yd - 1), (Yd + 1). The address data Xd, Yd, (Xd - 1), (Xd + 1), (Yd - 1), (Yd + 1) are stored in six registers 6f, respectively.

The display control 6 also has AND gates 6i, 6j connected to output terminals of the X- and Y-axis counters 6a, 6b for ANDing outputs from the counters 6a, 6b and a dry-run mode signal, and AND gates 6k, 6l connected to the output terminals of the X- and Y-axis counters 6a, 6b for ANDing their outputs and a signal produced by inverting the dry-run mode signal with an inverter 6n. When in the dry run mode, that is, the dry-run mode signal is of a logic level "1", the AND gates 6i, 6j open to allow counts of the X-axis cou er 6a and the Y-axis counter 6b or an X-axis address Xd and a Y-axis address Yd to pass to the memory addressing circuits 7a, 7b in the image memory 7, in which a planned path of movement is written. When in the non-dry run mode, or the dry-run mode signal is of a logic level "0", the AND gates 6i, 6j are closed and the AND gates 6k, 6l are rendered open, whereby the X- and Y-axis addresses Xd, Yd from the X- and Y-axis counters 6a, 6b are supplied respectively to the X- and Y-axis counters 6d, 6e, which then produce addresses on the sides of the addresses from the counters 6a, 6b and store them in the registers 6f. The X-axis addresses Xd, Xd - 1, Xd + 1 from the registers 6f are compared by an X-axis comparator 6g with a dot address from a dot counter in the display unit 8. When the X-axis addresses agree with the dot address, the X-axis comparator 6g produces an output. The Y-axis addresses Yd, Yd - 1, Yd + 1 from the registers 6f are compared by an Y-axis comparator 6h with a raster address from a raster counter in the display unit 8. When the Y-axis addresses agree with the dot address, the Y-axis comparator 6h produces an output. The outputs from the X- and Y-axis comparators 6g, 6h are ANDed by an AND gate 6m so that a video output will be generated at dot positions in conformity with the X-axis addresses Xd, Xd - 1, Xd + 1 on raster positions in conformity with the Y-axis addresses Yd, Yd - 1, Yd + 1. At the same time, data items are successively read out of the storage area 7c by the raster and dot counters so as to produce a video output indicative of a planned path of table movement. The video output from the AND gate 6m is mixed with the video signal from the storage area 7c, and the mixed signals are supplied to the display unit 8. Accordingly, the display unit 8 now displays an actual path of movement b as superimposed on the planned path of movement c.

For displaying the path of table movement as shown in Fig. 4, the display control 6 additionally has circuits 6d, 6e for producing memory addresses on both sides of memory addresses generated by the X- and Y-axis counters 6a, 6b. By writing signals of "1" at such side addresses in the image memory 7, a thicker line d (Fig. 4) indicative of an actual machining path up to a current position can be added to a planned machining path c which has been written in the image memory 7 during the dry run mode of operation, as illustrated in Fig. 4. The arrangement for generating the display as shown in Fig. 4 can be realized by removing from the circuit of Fig. 6 the comparators 6g, 6h and the AND gates and connecting the registers 6f to the X- and Y-axis counters 7a, 7b in the image memory 7 for writing coordinate data in the storage area 7c according to the X- and Y- addresses in the register 6f.  Since such an arrangement can be understood from Fig. 6 and the above description, it is not illustrated in detail.

The display patterns as shown in Figs. 3 and 4 can alternatively be plotted by providing an image memory for storing data on a path of dry run movement and another image memory for storing data on a path of actual machining movement, and by displaying both paths in superimposed relation on the display unit 8.

Although in the foregoing embodiments a graphics display unit of the raster scanning type has been described, the present invention is equally applicable to a graphics display unit of the random scanning type.  With this alternative graphics display unit, the display control 6 can operate in the manner as described above by utilizing interpolated pulses to produce memory addresses, which however are directly stored by the image memory 7.  An electron beam in the CRT display unit can be deflected according to the memory addresses as read out of the image memory 7 for creating the display patterns as illustrated in Figs. 3 and 4.

The marking b as illustrated in Fig. 3 may be in the form of a variety of markings, have different brightnesses, be blinking, or be differerently colored.  Likewise, the thicker line d may be of different brightnesses, blinking, or differently colored.

With the arrangement of the present invention, as described above, the graphics display apparatus can display a machining path followed by the machine tool based on movement command data supplied from the numerical control system, so that the operator can observe at once how much the workpiece has been machined so far. This enables the operator to take quick preparatory actions for the next machining step, for example, an advantage especially for electric discharge cutting machines which require a relatively long machining time. Where a plurality of numerically controlled machines are monitored at a central station, they can be monitored at once at the same time to quickly ascertain whether their machining processes are in progress as desired or delayed. The machining processes effected by the numerically controlled machines can easily be put under control for an increased efficiency with which the workpieces are machined into products. The operator can also find any uncontrolled operation of numerically controlled machines on the graphics display apparatus, so that appropriate measures can be taken to correct or otherwise remove damage to workpieces or errors in machining settings.

Although a certain preferred embodiment has been shown and described in detail, it should be understood that many changes and modifications may be made therein without departing from the scope of the appended claims. As an example, the display control 6 may be arranged to produce coordinate data directly from coordinate command data received from the control unit 2, rather than from interpolated pulses supplied.

WHAT WE CLAIM IS:

0083836

1. A method of displaying a path of movement of a machine tool numerically controllable by a numerical control system which processes machining command data supplied from an external source to produce a movement command for numerically controlling the movement of the machine tool, comprising the steps of:

converting the movement command from the numerical control system into coordinate data on a display unit during a machining mode of operation of the machine tool; and

displaying a machining path of movement of the machine tool on said display unit based on said coordinate data.

2. A method according to claim 1, wherein said displaying step includes the steps of writing said coordinate data at corresponding addresses in a memory to store data on said path of movement in said memory, and reading said coordinate data out of said image memory to display said machining path of movement of the machine tool on said display unit.

3. A method according to claim 1, wherein said converting step comprises the step of counting interpolated pulses generated as the movement command by the numerical control system to produce said coordinate data.

4. A method according to claim 1, wherein said converting step comprises the step of counting interpolated pulses generated for each of axes of movement of the machine tool by the numerical control system to produce said coordinate data for each of said axes.

5. A method according to claim 1, wherein said

converting step comprises the step of counting interpolated pulses generated as the movement command by the numerical control system to produce said coordinate data, and said displaying step including the steps of writing said coordinate data at corresponding addresses in a memory to store data on said machining path of movement in said memory, and reading said coordinate data out of said image memory to display said machining path of movement of the machine tool on said display unit.

6. A method according to claim 1, including the steps, prior to said converting step, of converting a movement command supplied in a dry-run mode from the numerical control system into coordinata data on said display unit, and writing said last-mentioned coordinate data at corresponding addresses in a memory to store a planned path of movement in said memory, said planned path of movement stored in said memory and said machining path of movement based on said first-mentioned coordinate data being displayable in superimposed relation on said display unit in said displaying step.

7. A method according to claim 6, wherein said first-mentioned converting step comprises the step of converting said first-mentioned movement command into a plurality of adjacent coordinate data.

8. A method according to claim 6, wherein said displaying step comprises the steps of writing said first-mentioned coordinate data at corresponding addresses in said memory in which said planned path of movement is stored to store said machining path of movement in said memory, and displaying said planned path of movement and said machining path of movement as read out of said memory in superimposed relation on said display unit.

9. A method according to claim 6, wherein said first-mentioned converting step comprises the step of counting interpolated pulses generated as said first-mentioned movement command by the numerical control system in the machining mode to produce said first-mentioned coordinate data, said second-mentioned converting step comprising the step of counting interpolated pulses generated as said second-mentioned movement command by the numerical control system in the dry run mode to produce said second-mentioned coordinate data.

10. An apparatus for displaying a path of movement of a machine tool numerically controllable by a numerical control system which processes machining command data supplied from an external source to produce a movement command for numerically controlling the movement of the machine tool, comprising:

a display control connected to the numerical control system for converting the movement command from the numerical control system into coordinate data; and

a display system for displaying a machining path of movement of the machine tool based on said coordinate data.

11. An apparatus according to claim 10, wherein said display system comprises a memory for writing therein said coordinate data to store said machining path of movement, and a display unit for reading said machining path of movement out of said memory to display the same.

12. An apparatus according to claim 10, wherein said display control comprises a counter assembly for counting interpolated pulses generated as the movement command from the numerical control system to produce said coordinate data.

13. An apparatus according to claim 12, wherein said counter assembly comprises an X-axis counter for counting X-axis interpolated pulses and a Y-axis counter for counting Y-axis interpolated pulses.

14. An apparatus according to claim 10, wherein said display system comprises a memory for storing a planned path of movement of the machine tool, and a display unit for displaying said machining path of movement and said planned path of movement in superimposed relation.

15. An apparatus according to claim 14, wherein said display control includes converter means for producing a plurality of coordinate data items from said movement command and supplying said coordinate data items to said memory to thereby write said machining path of movement in the latter.

0083836

# Fig. 1

# Fig.2

# Fig.4

# Fig.3

# Fig.5

# Fig.6